(19) **Europäisches Patentamt**
**European Patent Office**
**Office européen des brevets**

(11) **EP 4 228 943 B1**

(12) **EUROPÄISCHE PATENTSCHRIFT**

(45) Veröffentlichungstag und Bekanntmachung des Hinweises auf die Patenterteilung:
**02.07.2025 Patentblatt 2025/27**

(21) Anmeldenummer: **21754962.5**

(22) Anmeldetag: **03.08.2021**

(51) Internationale Patentklassifikation (IPC):
**B60W 30/095** (2012.01)     **B60W 30/09** (2012.01)
**B60W 40/114** (2012.01)     **B62D 15/02** (2006.01)

(52) Gemeinsame Patentklassifikation (CPC):
**B60W 30/0953; B60W 30/09; B60W 40/114;**
**B62D 15/0265;** B60W 2050/002; B60W 2050/0027;
B60W 2050/0033; B60W 2520/14; B60W 2710/207

(86) Internationale Anmeldenummer:
**PCT/EP2021/071601**

(87) Internationale Veröffentlichungsnummer:
**WO 2022/078648 (21.04.2022 Gazette 2022/16)**

(54) **VERFAHREN ZUM GENERIEREN EINER LATERALVERSATZ-TRAJEKTORIE**

METHOD FOR GENERATING A LATERAL OFFSET TRAJECTORY

PROCÉDÉ DE GÉNÉRATION D'UNE TRAJECTOIRE DE DÉCALAGE LATÉRAL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2020 DE 102020213013**

(43) Veröffentlichungstag der Anmeldung:
**23.08.2023 Patentblatt 2023/34**

(73) Patentinhaber: **Robert Bosch GmbH**
**70442 Stuttgart (DE)**

(72) Erfinder:
• **JOOS, Steffen**
**74399 Walheim (DE)**
• **LOEFFLER, Christian**
**74257 Untereisesheim (DE)**
• **GLOGER, Timm Florian**
**96047 Bamberg (DE)**

(56) Entgegenhaltungen:
• **JOOS STEFFEN ET AL: "Online-trajectory planning for state- and input-constrained linear SISO systems using a switched state variable filter", IFAC-PAPERSONLINE, vol. 50, no. 1, 1 July 2017 (2017-07-01), DE, pages 2639 - 2644, XP055856106, ISSN: 2405-8963, DOI: 10.1016/ j.ifacol.2017.08.466**

• **JOOS STEFFEN ET AL: "Constrained online trajectory planning for nonlinear flat SISO systems using a switched state variable filter", AUTOMATICA, PERGAMON, AMSTERDAM, NL, vol. 110, 26 September 2019 (2019-09-26), XP085864219, ISSN: 0005-1098, [retrieved on 20190926], DOI: 10.1016/ J.AUTOMATICA.2019.108583**

• **JOOS STEFFEN ET AL: "Kinematic real-time trajectory planning with state and input constraints for the example of highly automated driving", 2019 23RD INTERNATIONAL CONFERENCE ON SYSTEM THEORY, CONTROL AND COMPUTING (ICSTCC), IEEE, 9 October 2019 (2019-10-09), pages 779 - 784, XP033652833, DOI: 10.1109/ ICSTCC.2019.8886030**

• **SCHWARZMANN D ET AL: "A Flatness-Based Approach to Internal Model Control", AMERICAN CONTROL CONFERENCE, 2006 MINNEAPOLIS, MN, USA JUNE 14-16, 2006, PISCATAWAY, NJ, USA,IEEE, 14 June 2006 (2006-06-14), pages 5666 - 5671, XP010929943, ISBN: 978-1-4244-0209-0, DOI: 10.1109/ ACC.2006.1657627**

EP 4 228 943 B1

## EP 4 228 943 B1

**Beschreibung**

Stand der Technik

Notausweichmanöver zur Unfallvermeidung im Straßenverkehr können in der Regel erst zu einem sehr späten Zeitpunkt, d.h. kurz vor einer potentiellen Kollision, ausgelöst werden, wodurch sich hohe Anforderungen an die Dynamik des Manövers ergeben. Zum einen werden in vielen Situationen die beteiligten Objekte erst zu einem sehr späten Zeitpunkt sensorisch erfassbar, beispielsweise weil ein Fußgänger aus einer Sichtverdeckung auf eine Fahrspur tritt, zum anderen ist die Summe der Sensorunsicherheiten und der Unsicherheiten der weiteren Abläufe einer erfassten Situation regelmäßig sehr hoch, da beispielsweise abrupte Bewegungsänderungen eines kreuzenden Fußgängers schwer vorhergesagt werden können.

Eine vollständige Ausnutzung der zur Verfügung stehenden Dynamik, insbesondere der Fahrzeugdynamik, ist deshalb erstrebenswert.

Folgendes Dokument ist bekannt: JOOS STEFFEN ET AL: "Online-trajectory planning for state- and input-constrained linear SISO systems using a switched state variable filter",IFAC-PAPERSONLINE, Bd. 50, Nr. 1, 1. Juli 2017.

Offenbarung der Erfindung

Bei der Planung der Eingriffsgestaltung für die Fahrzeugquerdynamik von Fahrerassistenzfunktionen wird die entsprechende Fahrzeugtrajektorie meist so gewählt, dass sich ein optimaler Verlauf in Bezug auf den Komfort des Eingriffs ergibt, wobei beispielsweise eine Querbeschleunigungs- und/oder Querruckbeschränkung kontrolliert wird. Zur Einhaltung der Kontrollierbarkeitsgrenzwerte wird die Trajektorie so gewählt, dass das globale Gierratenmaximum mit dem Gierratengrenzwert der Kontrollierbarkeit übereinstimmt.

Hieraus resultiert ein Gierratenverlauf, welcher ein globales Maximum besitzt.

Zur Gewährleistung der Kontrollierbarkeit des Fahrzeugs durch manuelle Interventionen des Fahrers bei automatisch gesteuerten Eingriffen in die Fahrzeugdynamik, die potenziell fehlerbehaftet sein können, sollten Grenzwerte für dynamische Eingriffe eingehalten werden, welche im Rahmen von experimentellen Studien für verschiedene Aktoren und Fahrzeuge ermittelt wurden.

Es hat sich gezeigt, dass diese auf Aktoren bezogenen Grenzwerte in Bezug auf eine Fahrzeugquerdynamik auf systemunabhängige Grenzwerte für, z.B. eine Gierrate, des jeweiligen Fahrzeugs transferiert werden können.

Bei Entwicklungen solcher Fahrerassistenzfunktionen werden typischerweise aus einem systemunabhängigen Kontrollierbarkeitsgrenzwert, wie beispielsweise einer Gierrate, systemspezifische Aktorgrenzwerte abgeleitet.

Diese Grenzwerte der Aktoren, die entsprechende Stellgrößen einstellen und ggf. weitere notwendige Beschränkungen des Systemverhaltens, die durch sogenannte Zustandsgrößen beschrieben werden können, werden typischerweise jedoch nicht direkt in der Trajektorienplanung berücksichtigt, sondern fließen erst nachgelagert durch eine entsprechende Applikation der Trajektorienplanung in die Funktionsrealisierung ein. Dies erhöht die Applikationsaufwände.

Eine direkte Berücksichtigung der Gierratengrenzwerte innerhalb einer Funktionsimplementierung gestaltet sich unter Umständen problematisch, wenn aus dem Gierratengrenzwert ein aktorspezifischer Stellgrößengrenzwert abgeleitet werden muss. Aufgrund differentieller oder nichtlinearer Zusammenhänge kann dies typischerweise nicht ohne Vereinfachungen erfolgen. Solche Vereinfachungen können aber zu signifikanten Abweichungen zwischen der dadurch angenommenen Fahrzeugdynamik im Vergleich mit einer realen Fahrzeugdynamik führen. Hieraus können wiederum Überschreitungen der Kontrollierbarkeitsgrenzwerte im Gierratenverlauf des Manövers resultieren, die dann mit erhöhtem nachgelagertem Applikationsaufwand verhindert werden müssen.

Entwicklungen solcher Fahrerassistenzfunktionen, die eine direkte Berücksichtigung von Beschränkungen innerhalb der Trajektorienplanung ermöglichen, basieren typischerweise auf Optimierungsverfahren und sind daher in der Regel, aufgrund der hohen erforderlichen Rechenleistung, nur bedingt in Steuergeräte mobiler Plattformen für eine Serienfertigung integrierbar.

Dadurch bleibt gemäß dem Stand der Technik Potential zur Unfallvermeidung ungenutzt, da die maximale Gierrate, bzw. der Gierratengrenzwert, nur zu einem einzigen Zeitpunkt innerhalb des Verlaufs der Trajektorie erreicht wird.

Gemäß Aspekten der Erfindung wird ein Verfahren zum Generieren einer Lateralversatz-Trajektorie, ein Verfahren zum Bereitstellen eines Steuersignals, eine Verwendung des Verfahrens, eine Steuerungs-Vorrichtung, ein Computerprogrammprodukt und ein maschinenlesbares Speichermedium, gemäß den Merkmalen der unabhängigen Ansprüche, vorgeschlagen. Vorteilhafte Ausgestaltungen sind Gegenstand der abhängigen Ansprüche sowie der nachfolgenden Beschreibung.

In dieser gesamten Beschreibung der Erfindung ist die Abfolge von Verfahrensschritten so dargestellt, dass das Verfahren leicht nachvollziehbar ist. Der Fachmann wird aber erkennen, dass viele der Verfahrensschritte auch in einer anderen Reihenfolge durchlaufen werden können und zu dem gleichen oder einem entsprechenden Ergebnis führen. In diesem Sinne kann die Reihenfolge der Verfahrensschritte entsprechend geändert werden. Einige Merkmale sind mit Zählwörtern versehen, um die Lesbarkeit zu verbessern oder die Zuordnung eindeutiger zu machen, dies impliziert aber nicht ein Vorhandensein bestimmter Merkmale.

Es wird ein Verfahren zur Bestimmung einer Lateralversatz-Trajektorie für eine zumindest teilautomatisierte mobile Plattform vorgeschlagen, das die folgenden Schritte aufweist:

In einem Schritt wird ein Ziel-Lateralversatz bereitgestellt. In einem weiteren Schritt wird ein bereitgestelltes dynamisches Modell der mobilen Plattform invertiert. In einem weiteren Schritt wird zumindest eine Beschränkung einer Systemgröße des dynamischen Modells für die Bestimmung der Lateralversatz-Trajektorie bereitgestellt. In einem weiteren Schritt wird eine zeitliche Sequenz von Lateralversatz-Trajektorien-Punkten für das invertierte dynamische Modell mit einem Zustandsvariablenfilter, basierend auf der zumindest einen Beschränkung der Systemgröße, und dem Ziel-Lateralversatz als Eingangssignal, bestimmt, wobei jeder Punkt der zeitlichen Sequenz der Lateralversatz-Trajektorie analytisch bestimmt wird. In einem weiteren Schritt wird eine zeitliche Sequenz von Werten zumindest einer Stellgröße für die mobile Plattform, mittels des invertierten dynamischen Modells und der zeitlichen Sequenz der Lateralversatz-Trajektorien-Punkte als Eingangssignal für das invertierte dynamische Modell, zum Generieren der Lateralversatz-Trajektorie, bestimmt.

Gemäß einem Aspekt weist das Zustandsvariablenfilter eine unbeschränkte Wunschdynamik auf.

Mit anderen Worten wird bei diesem Verfahren mittels des invertierten dynamischen Modells die Stellgröße bestimmt, die dann als Eingangssignal für ein reales dynamisches System, wie beispielsweise eine mobile Plattform, dient.

Die Lateralversatz-Trajektorie kann von der mobilen Plattform aufgrund der zeitlichen Sequenz von Werten zumindest einer Stellgröße ausgeführt werden.

Dass jeder Punkt der zeitlichen Sequenz der Lateralversatz-Trajektorie mittels des Zustandsvariablenfilters analytisch bestimmt wird, ist in Bezug auf das Merkmal der analytischen Bestimmung breit auszulegen und insbesondere von Annäherungsverfahren und Optimierungsverfahren abzugrenzen. Insbesondere umfasst das analytische Bestimmen zumindest ein Bestimmen eines Integrals mit fester Schrittweite während der Laufzeit und zu jedem Zeitpunkt. Das analytische Bestimmen umfasst also insbesondere kein rekursives Bestimmen einzelner Punkte im Sinne eines Optimierungsverfahrens. Insbesondere umfasst das analytische Bestimmen ein Durchlaufen einer n-fachen Integratorkette, wobei n eine Systemordnung beschreibt, die das dynamische Modell charakterisiert.

Diese analytische Bestimmung der Punkte der zeitlichen Sequenz der Lateralversatz-Trajektorie kann beispielsweise mittels eines Computers und eines entsprechend konfigurierten Computerprogramms erfolgen.

Insbesondere kann mit der bestimmten zeitlichen Sequenz von Werten zumindest einer Stellgröße eine Sollvorgabe für einen weiteren Regelkreis zum Steuern der mobilen Plattform, entsprechend einer Vorsteuerung, beispielsweise durch die Vorgabe eines Lenkwinkels bzw. einer Lenkwinkelrate, die Lateralversatz-Trajektorie generiert werden.

Dieses Verfahren ermöglicht, basierend auf einem differenziell flachen System zur Beschreibung des dynamischen Modells der mobilen Plattform und einem Zustandsvariablenfilter, eine Online-Trajektorienplanung mit direkter Berücksichtigung von zumindest einer Systemgrößenbeschränkung, wobei insbesondere Stellgrößenbeschränkungen und/oder Zustandsgrößenbeschränkungen direkt bei der Online-Trajektorienplanung berücksichtigt werden können.

Dabei bestimmt das Zustandsvariablenfilter für die Online-Trajektorienplanung eine zeitliche Sequenz von Lateralversatz-Trajektorien-Punkten durch die n-fache zeitliche Differenzierung des Ziel-Lateralversatzes in flachen Koordinaten $w_z$. Außerdem kann mit diesem Verfahren durch die Bereitstellung einer zeitlichen Sequenz von Werten zumindest einer Stellgröße eine flachheitsbasierte Vorsteuerung und/oder Regelung realisiert werden, d. h., dass mit dem Verfahren zumindest eine Stellgröße in Form von einer Sequenz von Werten bereitgestellt wird, mit der die mobile Plattform gesteuert und/oder geregelt werden kann.

Durch eine Verwendung von differenziell flachen Systemen zur Beschreibung des dynamischen Modells und insbesondere des Zustandsvariablenfilters können alle systemtheoretischen Größen parametrisiert werden, und das dynamische Modell der mobilen Plattform kann dadurch invertiert werden, um eine Steuerung und/oder Regelung für die mobile Plattform aufzubauen. Dies gilt insbesondere für lineare steuerbare dynamische Modelle der mobilen Plattform, und insbesondere für nichtlineare dynamische Modelle der mobilen Plattform, wenn sie differenziell flach sind. Dabei sind lineare steuerbare Modelle immer differentiell flach, im nichtlinearen muss die Flachheitseigenschaft gesondert nachgewiesen werden.

Vorteilhafterweise ist mit diesem Verfahren eine direkte Berücksichtigung aller vorhandenen Zustands- und Stellgrößenbeschränkungen des dynamischen Modells der mobilen Plattform als integraler Bestandteil einer Online-Trajektorienplanung möglich und/oder es kann eine flachheitsbasierte Vorsteuerung zur Maximierung des Funktionsnutzens automatisierter Ausweichfunktionen bereitgestellt werden. Resultierend kann eine geschlossene Planung einer Ausweich-bzw. Lateralversatz-Trajektorie unter optimaler Ausnutzung des Kontrollierbarkeitsgrenzwerts einer Zustandsgröße, wie beispielsweise einer Gierrate, und/oder einer Stellgröße, wie beispielsweise einer Lenkwinkelrate erfolgen.

Zusätzlich können weitere Zustands- und Stellgrößenbeschränkungen realisiert werden, ohne dass hierzu die Lösung eines Optimierungsproblems während der Laufzeit erforderlich ist und das Verfahren somit kompatibel zur Rechenleistung von Seriensteuergeräten ist, die eingerichtet sind, das Verfahren auszuführen.

Mit anderen Worten ergibt sich mit dem Verfahren:

- eine Optimierung eines Funktionsnutzens von Ausweichfunktionen mit einer entsprechend generierten Lateralversatz-Trajektorie durch maximierte Ausnutzung von Kontrollierbarkeitsgrenzwerten von Zustandsgrößen, wie beispielsweise einer Gierrate, der mobilen Plattform und/oder Stellgrößen, wie beispielsweise einer Lenkwinkelrate.
- ein geschlossener modellbasierter Ansatz zur direkten und systematischen Berücksichtigung von Zustands- und Stellgrößenbeschränkungen, ohne die Notwendigkeit zur numerischen Lösung eines Optimalsteuerungsproblems während der Laufzeit.
- eine Gewährleistung einer Umsetzbarkeit der berechneten Trajektorien, da die vorhandenen Zustands- und Stellgrößenbeschränkungen bereits bei der Generierung der Lateralversatz-Trajektorie berücksichtigt werden.
- keine maßgebliche Erhöhung der Rechenzeit bzw. Echtzeitfähigkeit, da auf die numerische online Lösung eines Optimalsteuerungsproblems verzichtet werden kann, da die Berechnungen mittels rekursionsfreier Algorithmen erfolgt.
- eine online generierte Trajektorie, die ein adaptives Verhalten in Bezug auf einen notwendigen Lateralversatz ermöglicht, da bei einer Veränderung der Situation, welche zu einer Anpassung der Ausweichtrajektorie geführt hat, diese mit dem Verfahren direkt im nächsten Rechenschritt berücksichtigt werden kann.
- ein zusätzlicher Vorteil, da das bei der Generierung der Lateralversatz-Trajektorie verwendete dynamische Modell direkt einen aktorspezifischen Vorsteueranteil zur Realisierung des Ausweichmanövers bereitstellen kann.

Bei dem Verfahren kann das dynamische Modell der mobilen Plattform mit einem linearen Modell beschrieben werden, das in einer Zustandsraumdarstellung durch die Gleichungen: 4.1 und 4.2 beschrieben wird:

$$\dot{\underline{x}} = \underline{A} \cdot \underline{x} + \underline{b} \cdot u \qquad\qquad 4.1$$

$$y = \underline{c}^T \cdot \underline{x} \qquad\qquad 4.2$$

Dabei kennzeichnet $\underline{x}(t) \in R^n$ in Gleichung 4.1 einen Zustandsvektor des dynamischen Modells und $\dot{\underline{x}}$ eine zeitliche Ableitung von $\underline{x}(t)$. $u(t) \in R^1$ kennzeichnet eine Eingangsgröße und $y(t) \in R^1$ eine Ausgangsgröße des dynamischen Modells.

$\underline{A}$ kennzeichnet eine Systemmatrix, die das dynamische Verhalten des dynamischen Modells charakterisiert, $\underline{b}$ einen Eingangsvektor des Systems, $\underline{c}$ einen Ausgangsvektor und $y$ eine Ausgangsgröße des entsprechenden Systems, bzw. des dynamischen Modells.

Das dynamische Modell der mobilen Plattform kann insbesondere ein dynamisches Modell für eine Querdynamik der mobilen Plattform sein, das in expliziter Form durch die Gleichungen 4.3 und 4.4 charakterisiert wird.

$$
\begin{bmatrix} \dot{\beta} \\ \ddot{\psi} \\ \dot{\psi} \\ \dot{y}_L \\ \dot{\delta} \end{bmatrix}
=
\begin{bmatrix}
\frac{-c_v - c_h}{m \cdot v} & -1 - \frac{c_v \cdot l_v - c_h \cdot l_h}{m \cdot v^2} & 0 & 0 & \frac{c_v}{m \cdot v} \\
\frac{c_h \cdot l_h - c_v \cdot l_v}{J_z} & \frac{-c_v \cdot l_v^2 - c_h \cdot l_h^2}{J_z \cdot v} & 0 & 0 & \frac{c_v \cdot l_v}{J_z} \\
0 & 1 & 0 & 0 & 0 \\
v & 0 & v & 0 & 0 \\
0 & 0 & 0 & 0 & 0
\end{bmatrix}
\cdot
\begin{bmatrix} \beta \\ \dot{\psi} \\ \psi \\ y_L \\ \delta \end{bmatrix}
+
\begin{bmatrix} 0 \\ 0 \\ 0 \\ 0 \\ 1 \end{bmatrix}
\cdot \dot{\delta}_u \qquad 4.3
$$

$$y = \begin{bmatrix} 0 & 0 & 0 & 1 & 0 \end{bmatrix} \cdot \begin{bmatrix} \beta \\ \dot{\psi} \\ \psi \\ y_L \\ \delta \end{bmatrix} \qquad \qquad 4.4$$

Die Gleichungen 4.3 und 4.4 für das Modell der Querdynamik der mobilen Plattform basieren auf einem erweiterten linearisierten Einspurmodell, wobei das Modell der Querdynamik zusätzlich zu einem Standard-Einspurmodell mit den Zustandsgrößen: Schwimmwinkel ($\beta$) und Gierrate $d/dt\,\psi(t)$, entsprechend den Gleichungen 4.3 und 4.4, um die Zustandsgrößen: Gierwinkel $\psi(t)$, Lateralversatz $y_L(t)$ und Lenkwinkel $\delta(t)$ erweitert ist.

Zur Beschreibung des Modells der Querdynamik kann bei diesem Verfahren zum Generieren einer Lateralversatz-Trajektorie, anstelle eines Lenkwinkels $\delta(t)$, eine Lenkwinkelrate $\dot{\delta}_u(t)$ als Stellgröße gewählt werden. D. h. in dem Modell beschreibt der Lenkwinkel $\delta(t)$ einen Zustand des Systems und die Lenkwinkelrate $\dot{\delta}_u(t)$ charakterisiert eine Stellgröße für das System.

Die Parameter in der Matrix **A** kennzeichnen: eine Schräglaufsteifigkeit vorne $c_v$; eine Schräglaufsteifigkeit hinten $c_h$; eine Masse der mobilen Plattform m; eine Fahrzeuggeschwindigkeit v; einen Abstand $l_h$ eines Schwerpunktes der mobilen Plattform von ihrer Hinterachse; einen Abstand $l_v$ eines Schwerpunktes der mobilen Plattform von ihrer Vorderachse $l_v$; und ein Massenträgheitsmoment $J_z$ der mobilen Plattform in Bezug auf eine Hochachse.

Durch eine Invertierung des dynamischen Modells der mobilen Plattform kann aus einem vorgegebenen Ausgangsgrößenverlauf des nicht invertierten Modells, wie beispielsweise einer zeitlichen Abhängigkeit des Lateralversatzes $y_L(t)$, direkt ein Eingangsgrößenverlauf des nicht invertierten Modells, wie beispielsweise eine Lenkwinkelrate $\dot{\delta}_{u(t)}$, berechnet werden.

Zur Invertierung des dynamischen Modells 4.1 und 4.2 kann dieses zunächst mittels der Transformationsvorschriften 4.5 bis 4.8 in eine lineare Regelungsnormalform bzw. in (differentiell) flache Koordinaten $\underline{z}$ entsprechend den Gleichungen 4.9 und 4.10 überführt werden. Für das Modell der Querdynamik entsprechend den Gleichungen 4.3 und 4.4 resultiert daraus das Gleichungssystem der Gleichungen 4.11 und 4.12.

$$\underline{z} = \boldsymbol{T} \cdot \underline{x} \qquad \qquad 4.5$$

$$\boldsymbol{A}_R = \boldsymbol{T} \cdot \boldsymbol{A} \cdot \boldsymbol{T}^{-1} \qquad \qquad 4.6$$

$$\underline{b}_R = \boldsymbol{T} \cdot \underline{b} \qquad \qquad 4.7$$

$$\underline{c}_R{}^T = \underline{c}^T \cdot \boldsymbol{T}^{-1} \qquad \qquad 4.8$$

Die Gleichungen 4.1 und 4.2 in flache Koordinaten überführt können gemäß den folgenden Gleichungen 4.9 und 4.10 geschrieben werden.

$$\underline{\dot{z}} = \boldsymbol{A}_R \cdot \underline{z} + \underline{b}_R \cdot u \qquad \qquad 4.9$$

$$y = \underline{c}_R{}^T \cdot \underline{z} \qquad \qquad 4.10$$

Dabei stellt die Größe $z$ eine Variable für den (flachen) Ausgang des dynamischen Modells der Querdynamik dar.

Die Transformationsmatrix **T** (4.5b, 4.5a) dient einer Transformation der Zustände beschrieben in Originalkoordinaten $\underline{x}$ in flache Koordinaten $\underline{z}$. Die Matrix $\mathbf{A}_R$ charakterisiert das System des dynamischen Modells in flachen Koordinaten bzw. in der Regelungsnormalform; $\underline{b}_R$ beschreibt einen Eingangsvektor des transformierten Systems, $\underline{c}_R$ beschreibt einen Ausgangsvektor und y beschreibt eine Ausgangsgröße und u beschreibt eine Eingangsgröße des entsprechenden dynamischen Modells in flachen Koordinaten.

$$t^T = [0, 0, ..., 0, ß] \cdot Q_S^{-1} \qquad\qquad 4.5a$$

$$\boldsymbol{T} = [\boldsymbol{t}, \boldsymbol{A}^T \cdot \boldsymbol{t}, ..., (\boldsymbol{A}^T)^{n-1} \cdot \boldsymbol{t}]^T \qquad\qquad 4.5b$$

Dabei ist $Q_S$ die Steuerbarkeitsmatrix und $\beta$ ist ein Skalierungsfaktor und **t** ein $\beta$-Vielfaches der letzten Zeile der invertierten Steuerbarkeitsmatrix.

$$\begin{bmatrix} \dot{z} \\ \ddot{z} \\ \dddot{z} \\ z^{(4)} \\ z^{(5)} \end{bmatrix} = \begin{bmatrix} 0 & 1 & 0 & 0 & 0 \\ 0 & 0 & 1 & 0 & 0 \\ 0 & 0 & 0 & 1 & 0 \\ 0 & 0 & 0 & 0 & 1 \\ -a_0 & -a_1 & -a_2 & -a_3 & -a_4 \end{bmatrix} \cdot \begin{bmatrix} z \\ \dot{z} \\ \ddot{z} \\ \dddot{z} \\ z^{(4)} \end{bmatrix} + \begin{bmatrix} 0 \\ 0 \\ 0 \\ 0 \\ 1 \end{bmatrix} \cdot \dot{\delta}_u \qquad 4.11$$

$$y = \begin{bmatrix} c_{R,1} & c_{R,2} & c_{R,3} & c_{R,4} & c_{R,5} \end{bmatrix} \cdot \begin{bmatrix} z \\ \dot{z} \\ \ddot{z} \\ \dddot{z} \\ z^{(4)} \end{bmatrix} \qquad\qquad 4.12$$

Dabei ist $z^{(x)}$ eine (x)-fache zeitliche Ableitung von z(t).

Mit der gewählten Parametrierung gemäß der Gleichung 4.3 des Modells der Querdynamik der mobilen Plattform ergeben sich bei der Transformation einige Elemente von $\boldsymbol{A}_R$ und $\underline{c}_R{}^T$ nach den Gleichungen 4.13 und 4.14 zu Null, wodurch die Komplexität für die Lösung des Gleichungssystems deutlich reduziert wird.

$$a_0 = a_1 = a_2 = 0 \qquad\qquad 4.13$$

$$c_{R,4} = c_{R,5} = 0 \qquad\qquad 4.14$$

Hiermit vereinfacht sich die letzte Zeile des erweiterten Einspur-Modells der Querdynamik der mobilen Plattform zu 4.15, welche in flachen Koordinaten z gemäß Gleichung 4.16 invertiert werden kann.

$$z^{*(5)} = -a_3 \cdot \dddot{z}^* - a_4 \cdot z^{*(4)} + \dot{\delta}_u^* \qquad\qquad 4.15$$

$$\Rightarrow \dot{\delta}_u^* = z^{*(5)} + a_3 \cdot \dddot{z}^* + a_4 \cdot z^{*(4)} \qquad\qquad 4.16$$

Ein Verlauf einer Sollstellgröße, wie beispielsweise der Lenkwinkelrate $\dot{\delta}_u^*(t)$, kann somit entsprechend der Gleichung 4.16 mittels der entsprechenden Ableitungen des flachen Ausgangs z des dynamischen Modells direkt berechnet werden.

Für das Bestimmen der zeitlichen Sequenz von Lateralversatz-Trajektorien-Punkten kann der Ziel-Lateralversatz in räumlichen Koordinaten $w_y$, entsprechend einer Führungsgröße, in ein Referenzsignal $w_z$ in flache Koordinaten transformiert werden. Die entsprechende Umrechnung erfolgt durch eine Filterung entsprechend Gleichung 4.10 und führt auf die Filtergleichung 4.17.

$$w_y = \underline{c}_R{}^T \cdot \underline{w}_z = \underline{c}_R{}^T \cdot \begin{bmatrix} w_z \\ \dot{w}_z \\ \ddot{w}_z \\ \dddot{w}_z \\ w_z{}^{(4)} \end{bmatrix} = c_{R,1} \cdot w_z + c_{R,2} \cdot \dot{w}_z + c_{R,3} \cdot \ddot{w}_z$$

$$\Rightarrow \quad \ddot{w}_z = \frac{w_y - c_{R,1} \cdot w_z - c_{R,2} \cdot \dot{w}_z}{c_{R,3}} \qquad\qquad 4.17$$

Für ein online durchführbares Generieren der Lateralversatz-Trajektorie kann eine Ziel-Lateralversatztrajektorie $w_y(t)$ vorgegeben werden, die dann entsprechend der Filtergleichung 4.17 transformiert wird.

Insbesondere kann für ein online durchführbares Generieren der Lateralversatz-Trajektorie ein Ziel-Lateralversatz mit beispielsweise einem Ziel-Lateralversatz-Wert $w_y$ und einer Ziel-Zeit $t_{end}$ vorgegeben werden, die dann entsprechend der Filtergleichung 4.17 transformiert werden.

Für die online Trajektorienplanung wird die zeitliche Sequenz von Lateralversatz-Trajektorien-Punkten für das invertierte dynamische Modell gemäß der Vorsteuergleichung 4.16 durch die n-fache zeitliche Differentiation des Ziel-Lateralversatzes $w_z$ aus dem Filter 4.17 unter Verwendung des Zustandsvariablenfilters bestimmt.

Dazu kann ein Zustandsvariablenfilter mit einer Ordnung ($n = 5$) des erweiterten Einspurmodells 4.3 und 4.4 in flachen Koordinaten verwendet werden, der mit der Gleichung 4.18 beschrieben werden kann.

In anderen Worten: Der Zustandsvariablenfilter plant die zeitliche Sequenz von Lateralversatz-Trajektorien-Punkten für das invertierte erweiterte Einspurmodell. Daher besitzt das Zustandsvariablenfilter die identische Systemordnung, im betrachteten Fall n=5, zum angenommenen Strecken- bzw. Fahrzeugmodell. Darüber hinaus gehen in das unbeschränkte Zustandsvariablenfilter gemäß 4.18 keine weiteren Modellgrößen/Informationen aus dem Einspurmodell ein.

Entsprechend $\underline{\dot{z}}^* = \boldsymbol{A}_F \cdot \underline{z}^* + \boldsymbol{a}_{F,0} \cdot w_z$ folgt:

$$\begin{bmatrix} z^{*(1)} \\ z^{*(2)} \\ z^{*(3)} \\ z^{*(4)} \\ z^{*(5)} \end{bmatrix} = \begin{bmatrix} 0 & 1 & 0 & 0 & 0 \\ 0 & 0 & 1 & 0 & 0 \\ 0 & 0 & 0 & 1 & 0 \\ 0 & 0 & 0 & 0 & 1 \\ -a_{F,0} & -a_{F,1} & -a_{F,2} & -a_{F,3} & -a_{F,4} \end{bmatrix} \cdot \begin{bmatrix} z^* \\ z^{*(1)} \\ z^{*(2)} \\ z^{*(3)} \\ z^{*(4)} \end{bmatrix} + a_{F,0} \cdot w_z \qquad 4.18$$

Eine Vorgabe für eine Wunschdynamik für die Trajektorienplanung mittels des Zustandsvariablenfilters kann durch eine entsprechende Auslegung der Filterkoeffizienten ($a_{F,0}, ..., a_{F,4}$), beispielsweise gemäß Stand der Technik über eine Polvorgabe oder durch Auslegung eines Linear-quadratischen Reglers (LQR), unter Berücksichtigung der Streckendynamik, d.h. der mobilen Plattform und den angenommenen Systembeschränkungen erfolgen.

Mit der Vorgabe einer Wunschdynamik für den Zustandsvariablenfilter kann eine Anpassung der generierten Lateralversatz-Trajektorie an das Verhalten der mobilen Plattform erfolgen.

Mit anderen Worten wird zur Online-Trajektorienplanung unter Vorgabe eines Ziel-Lateralversatzes $w_y(t)$ bzw. $w_z(t)$ der Trajektorienverlauf $z^*(t)$ für das invertierte flachheitsbasierte dynamische Modell, entsprechend dem flachen Ausgang des dynamischen Modells, sowie dessen Zeitableitungen:

$$z^{*(1)}, \dots , z^{*(5)}; \quad \underline{z}^* = [z^*, z^{*(1)}, z^{*(2)}, z^{*(3)}, z^{*(4)}]$$

zur Bestimmung der zeitlichen Sequenz von Lateralversatz-Trajektorien-Punkten berechnet, welche dann als Eingangsgröße für das inverse Modell zur Berechnung des Stellgrößenverlaufs dienen, um einen Sollstellgrößenverlauf $\hat{\delta}^*(t)$ entsprechend Gleichung 4.16 zu berechnen.

Die Bestimmung einer zeitlichen Sequenz von Lateralversatz-Trajektorien-Punkten für das invertierte dynamische Modell kann, basierend auf einer Zustands-Systemgrößenbeschränkung, wie beispielsweise eine Beschränkung der Gierrate, mittels polytopischer Zustandsbeschränkungen, wie im Folgenden dargestellt, erfolgen und so integraler Bestandteil der Trajektorienplanung sein.

Eine solche Menge von k polytopischen Zustandsbeschränkungen entsprechend der Gleichung 4.19:

$$c_{x,k}(\boldsymbol{x}) := f_{x,k}^T \cdot \boldsymbol{x} - g_{x,k} \leq 0, \qquad k = 1, \dots , n_c$$

$$\boldsymbol{F_x} \cdot \underline{x}(t) - \underline{g}_x \leq 0 \qquad\qquad 4.19$$

beschreibt eine Beschränkung durch Grenzflächen (Hyperebenen) im Zustandsraum. Hierbei ist Menge aller Zustandsvektoren genau auf einer Grenzfläche durch $\{\underline{x} \,|\, \boldsymbol{F}_x \cdot \underline{x} = \underline{g}_x\}$ gegeben.

Und $\boldsymbol{F}_x$ ist eine Matrix, die eine Linearkombination von Zuständen definiert, die beschränkt wird; $\underline{x}(t)$ ist der Zustandsvektor in Originalkoordinaten; und der Vektor $\underline{g}_x$ gibt die Werte der jeweiligen Beschränkung an.

Für den hier betrachteten Fall der Gierratenbeschränkung reduzieren sich die polytopischen Zustandsbeschränkungen auf eine Box-Zustandsbeschränkung gemäß den Gleichungen 4.20 und 4.21 und $g_{x,\dot\psi}$ stellt direkt den Grenzwert des Zustands $\dot\psi$ dar.

$$\underline{f}_{x,\dot\psi}^{\;T} \cdot \underline{x}(t) - g_{x,\dot\psi} \leq 0 \qquad\qquad 4.20$$

$$\underline{f}_{x,\dot\psi}^{\;T} = [0 \quad 1 \quad 0 \quad 0 \quad 0] \qquad\qquad 4.21$$

Die Beschränkungen lassen sich durch Anwenden der Transformationsvorschrift in flache Koordinaten mit der oben beschriebenen Transformationsmatrix $\boldsymbol{T}$ für eine Transformation in flache Koordinaten gemäß den Gleichungen 4.22 und 4.23 überführen.

$$\underline{f}_{z^*,\dot\psi}^{\;T} = [f_{z^*,1} \quad f_{z^*,2} \quad f_{z^*,3} \quad f_{z^*,4} \quad f_{z^*,5}] = \underline{f}_{x,\dot\psi}^{\;T} \cdot \boldsymbol{T}^{-1} \qquad\qquad 4.22$$

$$g_{z^*,\dot\psi} = g_{x,\dot\psi} \qquad\qquad 4.23$$

Mit der gewählten Parametrierung des Systemmodells 4.3 ergeben sich bei der Transformation einige Elemente von $\underline{f}_{z^*,\dot\psi}^{\;T}$ entsprechend 4.24 zu 0.

$$f_{z^*,1} = f_{z^*,2} = f_{z^*,5} = 0 \qquad\qquad 4.24$$

Die Berücksichtigung der Beschränkung innerhalb der Trajektorienplanung erfolgt über die Limitierung der höchsten, d.h. der n-ten Ableitung ihres flachen Ausgangs $z^*$. Zur Erzeugung einer Abhängigkeit zwischen der höchsten Ableitung $z^{*(5)}$ und den Zustandsbeschränkung wird eine Approximation der Zustände $\underline{z}^*$ über einen kleinen Zeithorizont $\Delta t$ durch die Taylorreihe durchgeführt.

Die notwendige Limitierung von $z^{*(5)}$ lässt sich durch die Gleichungen 4.25 und 4.26 für die obere $g_{z^*,\dot\psi+}$ und untere $g_{z^*,\dot\psi-}$ Grenze der Gierrate berechnen.

$$z^{(5)}{}_{\dot\psi,max} = -\frac{\underline{f}_{z^*,\dot\psi}^{\;T}}{|\underline{f}_{z^*,\dot\psi}^{\;T} \cdot \underline{b}_p|} \cdot \boldsymbol{A}_p \cdot \underline{z}^* + \frac{g_{z^*,\dot\psi+}}{|\underline{f}_{z^*,\dot\psi}^{\;T} \cdot \underline{b}_p|} \qquad\qquad 4.25$$

$$z^{(5)}{}_{\dot\psi,min} = \frac{\underline{f}_{z^*,\dot\psi}{}^T}{\left|\underline{f}_{z^*,\dot\psi}{}^T \cdot \underline{b}_p\right|} \cdot \boldsymbol{A}_p \cdot \underline{z}^* - \frac{g_{z^*,\dot\psi-}}{\left|\underline{f}_{z^*,\dot\psi}{}^T \cdot \underline{b}_p\right|} \qquad\qquad 4.26$$

Hierbei sind $\boldsymbol{A}_p$ und $\underline{b}_p$ durch die Gleichungen 4.26b

$$\boldsymbol{A}_{\mathrm{P}} = \begin{bmatrix} 1 & \dfrac{\Delta t^1}{1!} & \cdots & \dfrac{\Delta t^{(n-1)}}{(n-1)!} \\ 0 & 1 & \cdots & \\ \vdots & & & \vdots \\ 0 & \cdots & 0 & 1 \end{bmatrix}, \quad \boldsymbol{b}_{\mathrm{P}} = \begin{bmatrix} \dfrac{\Delta t^n}{n!} \\ \dfrac{\Delta t^{n-1}}{(n-1)!} \\ \vdots \\ \dfrac{\Delta t^1}{1!} \end{bmatrix} \qquad\qquad 4.26b$$

gegeben.

Um die Realisierbarkeit der Ausweichtrajektorie bereits in der Trajektorienplanung sicherzustellen, kann zusätzlich eine Stellgrößenbeschränkung als Beschränkung einer Systemgröße bei dem Bestimmen einer zeitlichen Sequenz von Lateralversatz-Trajektorien-Punkten für die Lenkwinkelrate berücksichtigt werden.

Die Beschränkung der Lenkwinkelrate als Stellgröße des Systems erfolgt entsprechend den Gleichungen 4.15, 4.27 und 4.28 durch die Berechnung der maximal zulässigen höchsten Ableitung des flachen Ausgangs $z^*$ mit bereitgestellter Stellgrößenbeschränkung $\dot\delta_{max}$ und $\dot\delta_{min}$ gemäß der letzten Zeile der Systemgleichungen 4.3 in flachen Koordinaten.

$$z^{*(5)}{}_{\dot\delta_u,max} = -a_3 \cdot \ddot{z}^* - a_4 \cdot z^{*(4)} + \dot\delta_u, \max \qquad\qquad 4.27$$

$$z^{*(5)}{}_{\dot\delta_u,min} = -a_3 \cdot \ddot{z}^* - a_4 \cdot z^{*(4)} + \dot\delta_u, \min \qquad\qquad 4.28$$

Bei diesem Verfahren zum Generieren der Lateralversatz-Trajektorie ist insbesondere vorteilhaft, dass Zustands- und Stellgrößenlimitierungen als integraler Bestandteil des Generierens der Lateralversatz-Trajektorie berücksichtigt werden können.

Dadurch kann eine Einhaltung der oben beschriebenen Kontrollierbarkeitsgrenzwerte beispielsweise eine Zustandsgrößenbeschränkung, wie beispielsweise der Gierrate, eingeführt werden.

Somit kann die Berücksichtigung der Beschränkungen einer Zustandsgröße und/oder einer Stellgröße innerhalb der Trajektorienplanung mittels einer Limitierung der höchsten, d.h. der n-ten Ableitung ihres flachen Ausgangs $z^*$ erfolgen.

Entsprechend dem hier gezeigten Verfahren können weitere Zustands- und Stellgrößenbeschränkungen realisiert werden.

Das Differential-Gleichungssystem 4.18 kann dann durch eine numerische Integration, beispielsweise mit einer festen Schrittweite, während der Laufzeit gelöst werden, um die Online-Trajektorienplanung durchzuführen, wobei, wie beschrieben, die höchste Ableitung des flachen Ausgangs beschränkt sein kann.

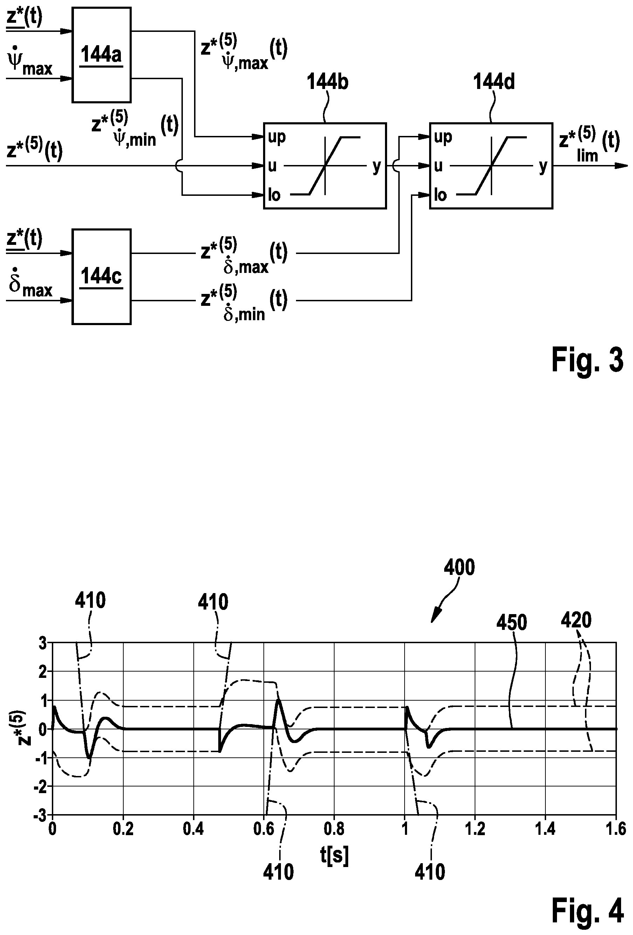

D.h., dass die zeitliche Sequenz von Lateralversatz-Trajektorien-Punkten für das invertierte dynamische Modell mit einem Zustandsvariablenfilter, basierend auf der zumindest einen Beschränkung der Systemgröße entsprechend einem schaltenden System angesehen werden kann, denn unter Verwendung der entworfenen Grenzfunktionen 4.25, 4.26, 4.27 und 4.28 lassen sich Sättigungsglieder 4.29 parametrieren (Verweis auf Abbildung 3 als Ausführungsbeispiel von Vorteil):

$$z^{*(5)}_{\{lim\}}(t) = \begin{cases} z^{*(5)}_{\min}\big(z^*(t)\big), & z^{*(5)}_D < z^{*(5)}_{\min} \\ z^{*(5)}_D\big(z^*(t), w_z(t)\big), & z^{*(5)}_{\min} \leq z^{*(5)}_D \leq z^{*(5)}_{\max} \\ z^{*(5)}_{\max}\big(z^*(t)\big), & z^{*(5)}_D > z^{*(5)}_{\max} \end{cases} \qquad 4.29$$

Dabei beschreibt $z^{*(5)}_D$ die unbeschränkte gewünschte Dynamik der zeitlichen Sequenz von Lateralversatz-Trajektorien-Punkten, der mit den Grenzfunktionen 4.25, 4.26, 4.27 und 4.28 so verschaltet wird, dass sich ein im Hinblick auf die angenommenen Systembeschränkungen zulässiger, nämlich limitierter, Trajektorienverlauf $z^{*(5)}_{\{lim\}}(t)$ ergibt.

Für die gewählten Beschränkungen der Stell- und Zustandsgrößen, gemäß der Formel 4.29, kann eine Priorisierung frei gewählt und ihre Reihenfolge über eine Reihenschaltung von Sättigungsgliedern realisiert werden. Diese Priorisierung bietet den Vorteil, dass, wenn die Einhaltung einer Beschränkung physikalisch unmöglich wird, automatisch die Beschränkung mit der nächst niedrigeren Priorität verwendet wird, um dennoch eine Lösung bereitzustellen.

Gemäß einem Aspekt wird vorgeschlagen, dass die jeweiligen Punkte der zeitlichen Sequenz der Lateralversatz-Trajektorien analytisch mittels der numerischen Online-Lösung einer Differentialgleichung und/oder eines Differenzialgleichungen Systems bestimmt und/oder berechnet werden.

Gemäß einem Aspekt wird vorgeschlagen, dass das Zustandsvariablenfilter eine vorgegebene Zieldynamik aufweist und insbesondere die vorgegebene Zieldynamik mit einem erweiterten Einspurmodell der mobilen Plattform charakterisiert wird.

Der Vorteil der Vorgabe einer Zieldynamik ist, dass das gewünschte dynamische Verhalten des Systems parametriert und vorgegeben werden kann.

Das erweiterte Einspurmodell kann verwendet werden, um alle relevanten Zustände des System zu berücksichtigen. Dabei wird das Einspurmodell unter anderem um den Zustand ‚Lateralversatz' erweitert, da für das Ausweichmanöver eine Trajektorie des Lateralversatzes geplant wird.

Gemäß einem Aspekt wird vorgeschlagen, dass das dynamische Modell der mobilen Plattform in flache Koordinaten transformiert ist; und insbesondere das System des Zustandsvariablenfilters und das System des dynamischen Modells eine identische Systemordnung aufweisen.

Wobei das beschränkte Zustandsvariablenfilter mit den Gleichungen 4.18 und 4.29 beschrieben werden kann.

Gemäß einem Aspekt wird vorgeschlagen, dass die jeweiligen Punkte der zeitlichen Sequenz der Lateralversatz-Trajektorien analytisch mittels einer numerischen Lösung, einer Differentialgleichung bestimmt werden.

Vorteilhafterweise kann durch die numerische Lösung, d.h. durch eine online Integration des Differentialgleichungssystems mit, im Vergleich zu Optimierungslösungen, wenig Rechenaufwand in kurzer Zeit eine Lateralversatz-Trajektorie und insbesondere eine zeitliche Sequenz von Lateralversatz-Trajektorien-Punkten bestimmt werden.

Gemäß einem Aspekt wird vorgeschlagen, dass die zumindest eine Systemgröße des dynamischen flachheitsbasierten Modells mittels einer polytopischen Zustandsbeschränkung der zumindest einen Systemgröße des Zustandsvariablenfilters beschränkt wird.

Vorteilhafterweise können mit polytopischen Zustandsbeschränkungen nicht nur Box-Beschränkungen, d.h. x < $x_{max}$ , berücksichtigt werden, sondern eine beliebige Linearkombination an Zuständen kann damit beschränkt, beispielsweise können so positionsabhängige Geschwindigkeitsbeschränkungen abgebildet bzw. berücksichtigt werden.

Gemäß einem Aspekt wird vorgeschlagen, dass eine unbeschränkte Wunschdynamik durch die zeitliche Sequenz von Lateralversatz-Trajektorien-Punkten charakterisiert wird, und mittels Filterkoeffizienten ($a_{F,0}$, ... , $a_{F,4}$) des Zustandsvariablenfilters durch Polvorgabe und/oder durch Auslegung eines Linear-quadratischen Reglers vorgegeben wird.

Insbesondere kann die Wunschdynamik beispielsweise eine Streckendynamik einer mobilen Plattform, wie beispielsweise eines Fahrzeugs, berücksichtigen. D.h. die Pole/Zeitkonstanten werden manuell und/oder unter Zuhilfenahme der genannten Entwurfsverfahren so gewählt, dass die geplante Trajektorie unbeschränkt die Wunschdynamik aufweist.

Durch eine explizite Berücksichtigung der Beschränkungen einer Systemgröße kann bei dem Verfahren zum Generieren einer Lateralversatz-Trajektorie die Wunschdynamik wesentlich hochdynamischer eingestellt werden, da diese nachgelagert unter Berücksichtigung der Beschränkungen limitiert ist und damit eine Realisierbarkeit gewährleistet wird.

Gemäß einem Aspekt wird vorgeschlagen, dass der Ziel-Lateralversatz einen Ziel-Lateralversatz-Wert innerhalb eines definierten Zeitintervalls festlegt.

Gemäß einem Aspekt wird vorgeschlagen, dass die zumindest eine Beschränkung einer Systemgröße des flachheitsbasierten dynamischen Modells zumindest eine Beschränkung einer Stellgröße und/oder zumindest eine Beschränkung einer Zustandsgröße des flachheitsbasierten dynamischen Modells betrifft.

Die Vorteile des so ausgestalteten Verfahrens sind oben schon dargelegt worden.

Gemäß einem Aspekt wird vorgeschlagen, dass das Zustandsvariablenfilter abhängig von einer priorisierenden Reihenfolge, basierend auf einer Beschränkung einer Stellgröße des dynamischen Modells, und/oder basierend auf einer Beschränkung einer Zustandsgröße des dynamischen Modells beschränkt ist.

Mit anderen Worten können die gewählten Beschränkungen der Stell- und Zustandsgrößen entsprechend einer Priorisierung frei gewählt und ihre Reihenfolge über eine Reihenschaltung von Sättigungsgliedern realisiert werden. Diese Priorisierung bietet den Vorteil, dass wenn die Einhaltung einer priorisierten Beschränkung physikalisch unmöglich wird, automatisch die Beschränkung mit der nächst niedrigeren Priorität beschränkt wird, um dennoch eine Lösung bereitzustellen.

Gemäß einem Aspekt wird vorgeschlagen, dass die zumindest eine beschränkte Stellgröße des flachheitsbasierten dynamischen Modells eine Stellgröße und/oder ein Gradienten der Stellgröße und/oder eine Beschleunigung der Stellgröße zumindest eines Aktuator ist, der eine laterale Dynamik der mobilen Plattform beeinflusst. Dadurch lässt sich das Verfahren unterschiedlichen Anforderungen für eine Steuerung und/oder Regelung bzw. einen Betrieb der mobilen Plattform anpassen.

Gemäß einem Aspekt wird vorgeschlagen, dass der zumindest eine Aktuator einen Lenkwinkel und/oder zumindest einen Bremsdruck und/oder zumindest einen Rad-Dämpfer steuert.

Durch die Steuerung von unterschiedlichen Aktuatoren kann eine Anpassung an einen Typ der mobilen Plattform oder an bestimmte dynamische Verhaltensweisen der mobilen Plattform vorgenommen werden.

Gemäß einem Aspekt wird vorgeschlagen, dass die zumindest eine Beschränkung der Zustandsgröße des dynamischen Modells ein Schwimmwinkel und/oder ein Gierwinkel und/oder eine Gierrate und/oder eine Querbeschleunigung und/oder ein Lenkwinkel und/oder ein Lateralversatz der mobilen Plattform ist.

Damit kann das Verfahren an die unterschiedlichen Anforderungen zur Steuerung und/oder Regelung einer Dynamik einer mobilen Plattform angepasst werden.

Es wird ein Verfahren vorgeschlagen, bei dem, basierend auf einer zeitlichen Sequenz von Werten zumindest einer Stellgröße, ein Steuersignal zur Ansteuerung eines zumindest teilautomatisierten Fahrzeugs bereitgestellt wird; und/oder, basierend auf der zeitlichen Sequenz von Werten zumindest einer Stellgröße, ein Warnsignal zur Warnung eines Fahrzeuginsassen bereitgestellt wird.

Mit einem solchen Steuer- und/oder Warnsignal kann eine höhere Sicherheit bei einer zumindest teilweise automatisiert betriebenen mobilen Plattform erreicht werden.

Der Begriff "basierend auf" ist in Bezug auf das Merkmal, dass ein Steuersignal basierend auf einer zeitlichen Sequenz von Werten zumindest einer Stellgröße bereitgestellt wird, breit zu verstehen. Er ist so zu verstehen, dass die zeitliche Sequenz von Werten zumindest einer Stellgröße, für jedwede Bestimmung oder Berechnung eines Steuersignals herangezogen wird, wobei das nicht ausschließt, dass auch noch andere Eingangsgrößen für diese Bestimmung des Steuersignals herangezogen werden. Dies gilt entsprechend für die Bereitstellung eines Warnsignals.

Es wird eine Verwendung des oben beschriebenen Verfahrens zur Vermeidung von Unfällen im Straßenverkehr vorgeschlagen.

Es wird eine Steuerungs-Vorrichtung vorgeschlagen, die eingerichtet ist, eines der oben beschriebenen Verfahren zum Generieren einer Lateralversatz-Trajektorie für eine zumindest teilautomatisierte mobile Plattform durchzuführen.

Gemäß einem Aspekt wird ein Computerprogramm angegeben, das Befehle umfasst, die bei der Ausführung des Computerprogramms durch einen Computer diesen veranlassen, eines der oben beschriebenen Verfahren auszuführen. Ein solches Computerprogramm ermöglicht den Einsatz des beschriebenen Verfahrens in unterschiedlichen Systemen.

Es wird ein maschinenlesbares Speichermedium angegeben, auf dem das oben beschriebene Computerprogramm gespeichert ist. Mittels eines solchen maschinenlesbaren Speichermediums ist das oben beschriebene Computerprogramm transportabel.

Unter einer mobilen Plattform kann ein zumindest teilweise automatisiertes System verstanden werden, welches mobil ist, und/oder ein Fahrerassistenzsystem. Ein Beispiel kann ein zumindest teilweise automatisiertes Fahrzeug bzw. ein Fahrzeug mit einem Fahrerassistenzsystem sein. Das heißt, in diesem Zusammenhang beinhaltet ein zumindest teilweise automatisiertes System eine mobile Plattform in Bezug auf eine zumindest teilweise automatisierte Funktionalität, aber eine mobile Plattform beinhaltet auch Fahrzeuge und andere mobile Maschinen einschließlich Fahrerassistenzsysteme. Weitere Beispiele für mobile Plattformen können Fahrerassistenzsysteme mit mehreren Sensoren oder mobile Multisensor-Roboter sein.

Ausführungsbeispiele

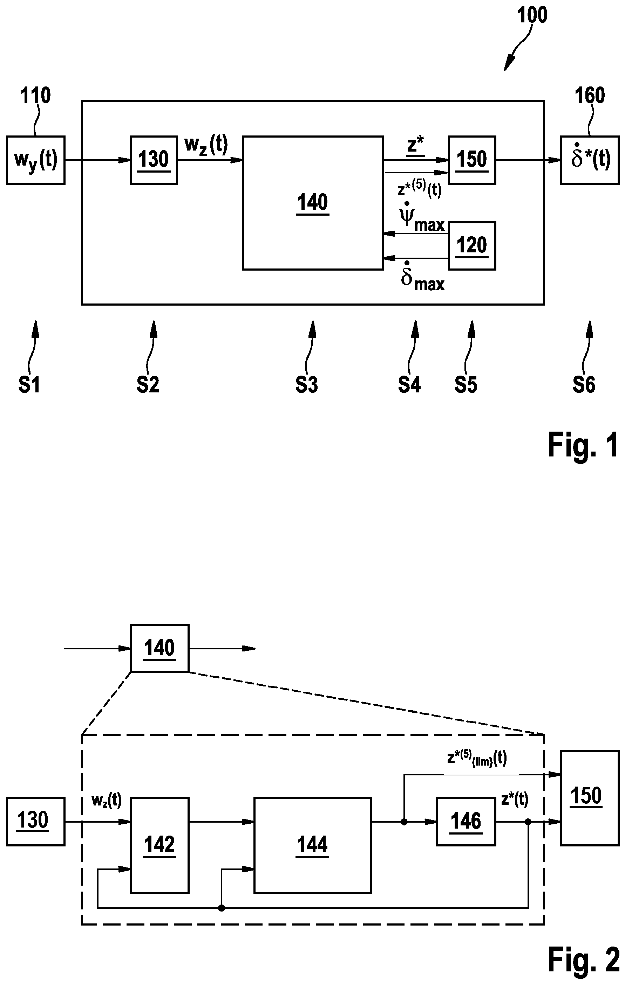

Ausführungsbeispiele der Erfindung werden mit Bezug auf die Figur 1 dargestellt und im Folgenden näher erläutert. Es zeigt:

Figur 1      ein Datenflussdiagramm des Verfahrens zum Generieren einer Lateralversatz-Trajektorie;

Figur 2      ein Datenflussdiagramm der Online-Trajektorienplanung mit dem begrenzten Zustandsvariablenfilter;

Figur 3      eine Kaskade aus zwei Sättigungselementen zur priorisierungsbasierten Berücksichtigung von Zustands- und Stellgrößenbeschränkungen innerhalb der Trajektorienplanung;

Figur 4      einen zeitlichen Verlauf der beschränkten höchsten Ableitung des flachen Ausgangs des dynamischen Modells;

Figur 5a, b      einen zeitlichen Verlauf des Lenkwinkels und der beschränkten Lenkwinkelrate;

Figur 6a      einen Vergleich von Ausweichtrajektorien;

Figur 6b      einen Vergleich von Gierratenverläufen; und

Figur 7      eine Simulation eines Szenarios einer Ausweichfunktion mit einer Lateralversatz-Trajektorie.

Die Figur 1 skizziert schematisch ein Flussdiagramm des Verfahrens 100 zum Generieren einer Lateralversatz-Trajektorie 620 für eine zumindest teilautomatisierte mobile Plattform. In dem Schritt S1 wird dem Verfahren ein Ziel-Lateralversatz $w_y(t)$ 110 bereitgestellt. In dem Schritt S2 wird der Ziel-Lateralversatz $w_y(t)$ 110 mittels des Filters 130 in flache Koordinaten transformiert $w_z(t)$. Für eine Online-Trajektorienplanung 140 wird dem Zustandsvariablenfilter 142 der Online-Trajektorienplanung 140 der Ziel-Lateralversatz in flachen Koordinaten $w_z(t)$, und im Schritt S4 eine Beschränkung einer Stellgröße 120 $\dot{\delta}_{u,max}$ und eine Beschränkung einer Zustandsgröße 120 $\dot{\psi}_{max}$ als Eingangsgrößen bereitgestellt. Weiter wird im Schritt S3 eine zeitliche Sequenz von Lateralversatz-Trajektorien-Punkten $\underline{z}^*(t_n)$ und die fünfte zeitliche Ableitung $z^{5*}(t)$ für die Bestimmung der zeitlichen Sequenz von Lateralversatz-Trajektorien-Punkten als Eingangsgrößen für das invertierte flachheitsbasierte dynamische Modell 150 bestimmt und dem invertierten dynamischen Modell im Schritt S5 bereitgestellt. Mittels der zeitlichen Sequenz von Lateralversatz-Trajektorien-Punkten $\underline{z}^*(t_n)$ und der fünften zeitlichen Ableitung $z^{5*}(t)$ wird im Schritt S6 durch das invertierte flachheitsbasierte dynamische Modell 150 eine zeitliche Sequenz von Werten zumindest einer Stellgröße $\dot{\delta}_u^*(t)$ 160 der mobilen Plattform bestimmt. Die zeitliche Sequenz von Werten 160 zumindest einer Stellgröße $\dot{\delta}_u^*(t)$ 160 der mobilen Plattform kann für eine Vorsteuerung für eine Trajektoriensteuerung der mobilen Plattform verwendet werden.

Die Figur 2 skizziert schematisch die Informationsflüsse der Online-Trajektorienplanung 140 der Figur 1 in flachen Koordinaten, wobei die Online-Trajektorienplanung 140 entsprechend einem erweiterten, schaltenden Zustandsvariablenfilter 140 mit einer unbeschränkten Filterwunschdynamik 142, einen Begrenzer 144 und eine Integratorkette 146 aufweist.

Dabei wird aus dem Ziel-Lateralversatz in flachen Koordinaten $w_z(t)$ 130 mittels der vorgegebenen Wunschdynamik des Zustandsvariablenfilters 142 ein unbeschränktes Wunschsignal für die höchste zeitliche Ableitung des flachen Ausgangs $z^{n*}(t)$ des dynamischen Modells bestimmt, die durch den Begrenzer 144 begrenzt und durch die Integratorkette 146 aufintegriert wird, woraus Trajektorien $z^*$ und $z^{*(1)}, ... , z^{*(n)}$ und dessen n zeitliche Ableitungen resultieren, um eine zeitliche Sequenz von Lateralversatz-Trajektorien-Punkten als Eingangsgröße für das inverse flachheitsbasierte dynamische Modell der mobilen Plattform 150 bereitzustellen. Dabei wird diese Eingangsgröße sowohl in den Begrenzer 144 als auch in die Dynamik des Zustandsvariablenfilters 142 für den nächsten Berechnungsschritt zurückgekoppelt. Das Ausgangssignal der Online-Trajektorienplanung 140 wird dem inversen flachheitsbasierten dynamischen Modell 150, beispielsweise zur Berechnung der Vorsteuerung $\dot{\delta}(t)$ bereitgestellt. Dabei wird bei diesem Verfahren die Systemgröße dynamisch gemäß den Grenzfunktionen 4.25, 4.26, 4.27 und 4.28 begrenzt, d.h. die Dynamik des Filters ist zeitvariant begrenzt.

Die Figur 3 skizziert schematisch einen Datenfluss einer Priorisierung der Begrenzung einer Zustandsgröße und/oder einer Stellgröße mittels eines ersten Sättigungsfilters 144b und eines zweiten seriell dahinter geschalteten Sättigungsfilters 144d, wobei der erste Sättigungsfilter 144b eine Zustandsgröße, wie zum Beispiel eine Gierrate, begrenzen kann und der zweite in Informationsfluss-Richtung hinter dem ersten Sättigungsfilter 144b angeordnete zweite Sättigungsfilter 144d eine Stellgröße, wie beispielsweise eine Lenkwinkelgeschwindigkeit, begrenzen kann, um eine Eingangsgröße, nämlich eine fünfte Ableitung von z, erst mittels des ersten Sättigungsfilters 144b und/oder mittels des zweiten Sättigungsfilters 144d zu begrenzen. Dabei wird der Gierratenlimitierung 144a sowohl eine Begrenzung der Gierrate als auch der Trajektorienverlauf des flachen Ausgangs $z^*(t)$ des dynamischen Modells, sowie dessen Zeitableitungen, bzw. die Filterzustände der Gleichung 4.18 bereitgestellt. Der Lenkwinkelgeschwindigkeitslimitierung 144 c wird sowohl eine Begrenzung der Lenkwinkelgeschwindigkeit als auch der Trajektorien Verlauf des flachen Ausgangs $z^*(t)$ des dynamischen Modells, sowie dessen Zeitableitungen bereitgestellt.

Somit kann also durch eine Kaskadierungsreihenfolge der beiden Begrenzer eine Priorisierung der Beschränkung erreicht werden.

Die Figur 4 zeigt ein Diagramm 400 in dem mit der Kurve 450 die fünfte Ableitung des Trajektorienverlaufs des flachen Ausgangs z gegenüber der Zeit t aufgetragen ist. Dabei wird durch den Verlauf der Kurve einer Begrenzung durch die Zustandsgröße 410 und durch den Verlauf der Kurve einer Begrenzung durch die Stellgröße 420 die Limitierung der fünften Ableitung skizziert. Dabei ist zu erkennen, dass die fünfte Ableitung innerhalb der oberen und unteren Grenze der Stellgröße 420 durch die maximale Ausnutzung der Zustandsgröße 410 festgelegt wird.

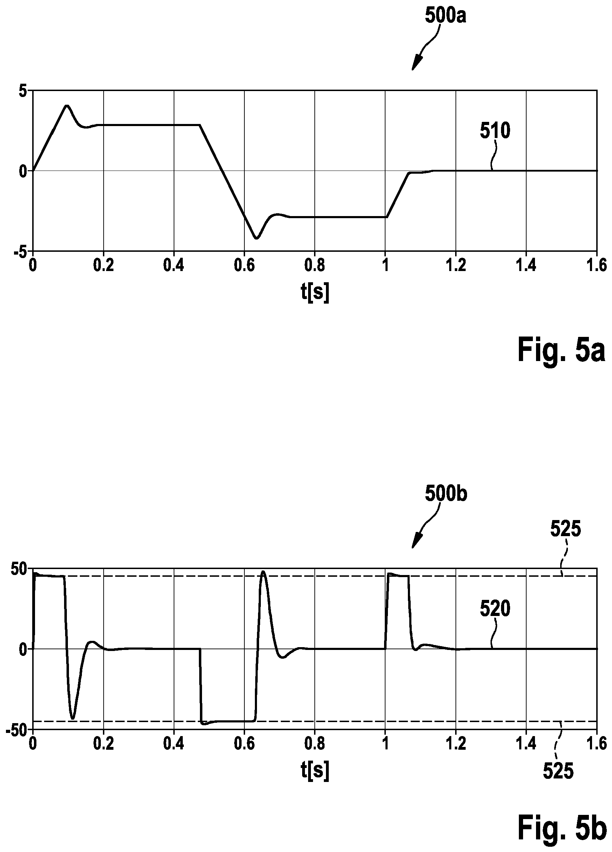

Die Figur 5a skizziert mit dem Diagramm 500a einen beispielhaften Verlauf der Stellgröße des Lenkwinkels 510 über der Zeit.

Und die Figur 5b skizziert mit dem Diagramm 500b den entsprechenden Verlauf der Lenkwinkelrate 520 mit der oberen und unteren Begrenzung 525.

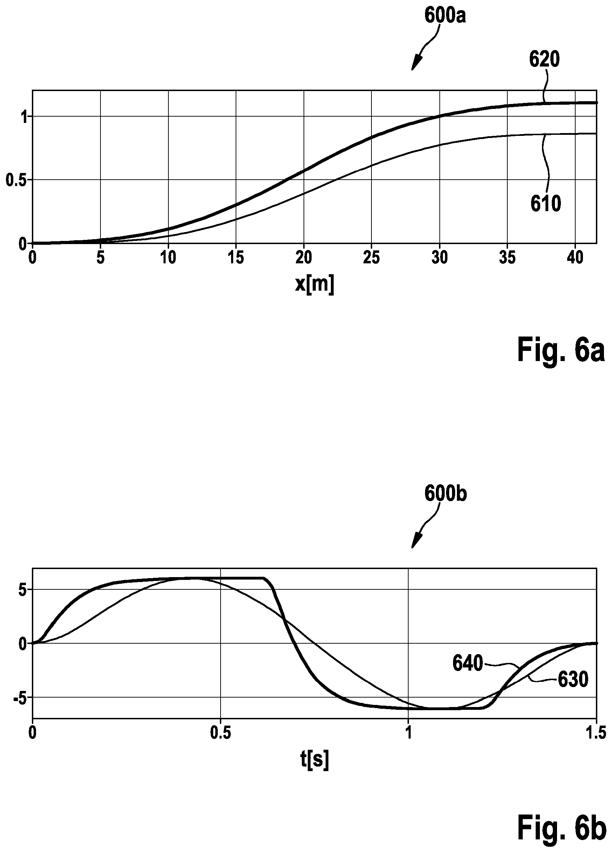

In der Figur 6a wird eine mit diesem Verfahren generierte Lateralversatz-Trajektorie 620 mit einer anders generierten Lateralversatz-Trajektorie 610 in dem Diagramm 600a verglichen, wobei Letztere entsprechend dem Stand der Technik, ohne maximierte Nutzung einer Zustandsbegrenzung zur Bestimmung der Trajektorie, generiert wurde.

Dabei ist der Lateralversatz y der mobilen Plattform in dem Diagramm 600a innerhalb der gleichen Strecke x aufgetragen und es ist zu erkennen, dass mit dem neuen Verfahren eine Vergrößerung des Lateralversatzes um ca. 20% realisiert werden kann.

Mit dem Diagramm 600b der Figur 6b, in dem die Gierrate über der Zeit t sowohl für das hier beschriebene Verfahren 640 als auch gemäß einem Stand der Technik 630 aufgetragen ist, wird verdeutlicht, dass durch eine innerhalb des Zeitbereichs der Trajektorie maximierten Ausnutzung der maximal möglichen Gierrate entsprechend dem beschriebenen Verfahren ein verbesserter Verlauf der Trajektorie erreicht werden kann.

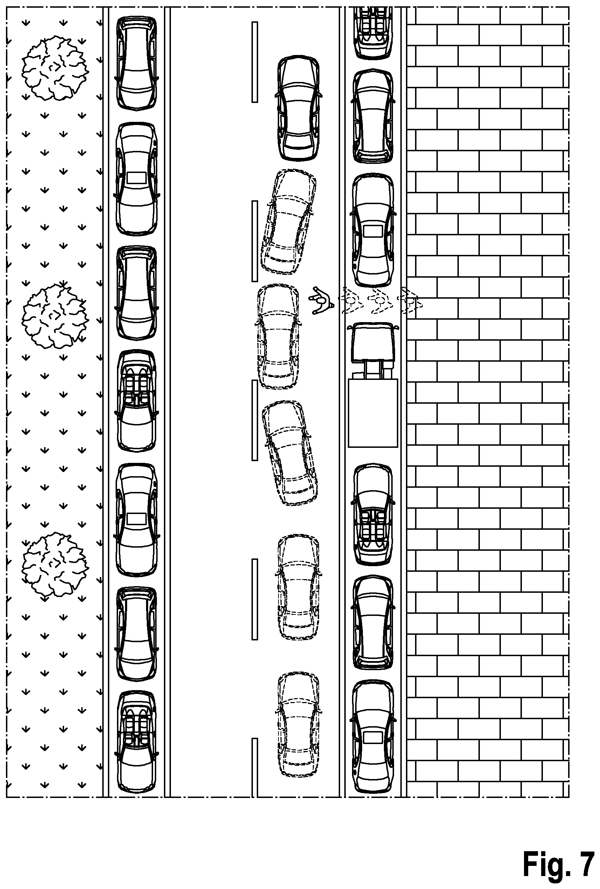

Die Figur 7 skizziert ein Verkehrs-Szenario mit einer Simulation einer Ausweichfunktion mit einer Lateralversatz-Trajektorie, das durch eine Person auf der Fahrbahn ausgelöst wird.

**Patentansprüche**

1. Verfahren zum Generieren einer Lateralversatz-Trajektorie für eine zumindest teilautomatisierte mobile Plattform, mit den Schritten:

   Bereitstellen eines Ziel-Lateralversatzes (110)(S1);
   Invertieren eines bereitgestellten dynamischen Modells der mobilen Plattform;
   Bereitstellen zumindest einer Beschränkung einer Systemgröße (120) (S4) des dynamischen Modells für die Bestimmung der Lateralversatz-Trajektorie, wobei das dynamischen Modell von den Zustandsgrößen (120, 144b, 144d): Schwimmwinkel und Gierwinkel und Gierrate und Lenkwinkel und Lateralversatz der mobilen Plattform abhängt;
   Bestimmen einer zeitlichen Sequenz von Lateralversatz-Trajektorien-Punkten für das invertierte dynamische Modell (150) mit einem Zustandsvariablenfilter (140, 142), basierend auf der zumindest einen Beschränkung der Systemgröße (120), und dem Ziel-Lateralversatz (110, 130) als Eingangssignal;
   wobei jeder Punkt der zeitlichen Sequenz der Lateralversatz-Trajektorie analytisch bestimmt wird; und
   Bestimmen einer zeitlichen Sequenz von Werten zumindest einer Stellgröße (160) (S6) für die mobile Plattform, mittels des invertierten dynamischen Modells (150) und der zeitlichen Sequenz der Lateralversatz - Trajektorien-Punkte als Eingangssignal für das invertierte dynamische Modell (150)(S5), zum Generieren der Lateralversatz-Trajektorie.

2. Verfahren gemäß Anspruch 1, wobei das Zustandsvariablenfilter (140, 142) eine vorgegebene Zieldynamik aufweist und insbesondere die vorgegebene Zieldynamik mit einem erweiterten Einspurmodell der mobilen Plattform charakterisiert wird.

3. Verfahren gemäß einem der vorhergehenden Ansprüche, wobei das dynamische Modell der mobilen Plattform in flache Koordinaten transformiert ist; und insbesondere das System des Zustandsvariablenfilters und das System des dynamischen Modells eine identische Systemordnung aufweisen.

4. Verfahren gemäß einem der vorhergehenden Ansprüche, wobei die jeweiligen Punkte der zeitlichen Sequenz der Lateralversatz-Trajektorien analytisch mittels einer numerischen Lösung einer Differentialgleichung bestimmt werden.

5. Verfahren gemäß einem der vorhergehenden Ansprüche, wobei die zumindest eine Systemgröße des dynamischen flachheitsbasierten Modells (150) mittels einer polytopischen Zustandsbeschränkung der zumindest einen Systemgröße des Zustandsvariablenfilters (142) beschränkt wird.

6. Verfahren gemäß einem der vorhergehenden Ansprüche, wobei die zumindest eine Beschränkung einer Systemgröße des dynamischen Modells zumindest eine Beschränkung einer Stellgröße (120, 144b, 144d) und/oder zumindest eine Beschränkung einer Zustandsgröße (120, 144b, 144d) des dynamischen Modells betrifft.

7. Verfahren gemäß Anspruch 6, wobei das Zustandsvariablenfilter (142) abhängig von einer priorisierenden Reihenfolge, basierend auf einer Beschränkung einer Stellgröße (120, 144b, 144d) des dynamischen Modells, und/oder basierend auf einer Beschränkung einer Zustandsgröße (120, 144b, 144d), des dynamischen Modells beschränkt ist.

8. Verfahren gemäß Anspruch 6 oder 7, wobei die zumindest eine beschränkte Stellgröße (120, 144b, 144d) des dynamischen Modells eine Stellgröße und/oder einen Gradienten der Stellgröße und/oder eine Beschleunigung der Stellgröße zumindest eines Aktuators ist, der eine laterale Dynamik der mobilen Plattform beeinflusst.

9. Verfahren gemäß Anspruch 8, wobei der zumindest eine Aktuator einen Lenkwinkel und/oder zumindest einen Bremsdruck und/oder zumindest einen Rad-Dämpfer steuert.

10. Verfahren gemäß Anspruch 6 bis 9, wobei die zumindest eine Beschränkung der Zustandsgröße (120, 144b, 144d) des dynamischen Modells ein Schwimmwinkel und/oder ein Gierwinkel und/oder eine Gierrate und/oder eine Querbeschleunigung und/oder ein Lenkwinkel und/oder ein Lateralversatz der mobilen Plattform ist.

11. Verfahren, bei dem, basierend auf einer zeitlichen Sequenz von Werten zumindest einer Stellgröße (160), gemäß Anspruch 1 bis 10, ein Steuersignal zur Ansteuerung eines zumindest teilautomatisierten Fahrzeugs bereitgestellt wird; und/oder, basierend auf der zeitlichen Sequenz von Werten zumindest einer Stellgröße (160), ein Warnsignal zur Warnung eines Fahrzeuginsassen bereitgestellt wird.

12. Verwendung des Verfahrens gemäß Anspruch 1 bis 10 zur Vermeidung von Unfällen im Straßenverkehr.

13. Steuerungs-Vorrichtung die eingerichtet ist, ein Verfahren, gemäß einem der Ansprüche 1 bis 11, durchzuführen.

14. Computerprogramm, umfassend Befehle, die bei der Ausführung des Computerprogramms durch einen Computer diesen veranlassen, das Verfahren nach einem der Ansprüche 1 bis 11 auszuführen.

15. Maschinenlesbares Speichermedium, auf dem das Computerprogramm nach Anspruch 14 gespeichert ist.

## Claims

1. Method for generating a lateral offset trajectory for an at least partly automated mobile platform, having the following steps:

   providing a target lateral offset (110) (S1);
   inverting a provided dynamic model of the mobile platform;
   providing at least one restriction of a system variable (120) (S4) of the dynamic model for the determination of the lateral offset trajectory, wherein the dynamic model depends on the state variables (120, 144b, 144d): sideslip angle and yaw angle and yaw rate and steering angle and lateral offset of the mobile platform;
   determining a time sequence of lateral offset trajectory points for the inverted dynamic model (150) with a state variable filter (140, 142), based on the at least one restriction of the system variable (120), and the target lateral offset (110, 130) as an input signal;
   wherein each point of the time sequence of the lateral offset trajectory is determined analytically; and
   determining a time sequence of values of at least one manipulated variable (160) (S6) for the mobile platform, by means of the inverted dynamic model (150) and the time sequence of lateral offset trajectory points as an input signal for the inverted dynamic model (150) (S5), for generating the lateral offset trajectory.

2. Method according to Claim 1, wherein the state variable filter (140, 142) has predetermined target dynamics, and in particular the predetermined target dynamics are **characterized by** an extended single-track model of the mobile platform.

3. Method according to one of the preceding claims, wherein the dynamic model of the mobile platform is transformed into flat coordinates; and in particular the system of the state variable filter and the system of the dynamic model have an identical system order.

4. Method according to one of the preceding claims, wherein the respective points of the time sequence of the lateral offset trajectories are determined analytically by means of a numerical solution of a differential equation.

5. Method according to one of the preceding claims, wherein the at least one system variable of the dynamic flatness-based model (150) is restricted by means of a polytopic state restriction of the at least one system variable of the state variable filter (142).

6. Method according to one of the preceding claims, wherein the at least one restriction of a system variable of the dynamic model relates to at least one restriction of a manipulated variable (120, 144b, 144d) and/or at least one restriction of a state variable (120, 144b, 144d) of the dynamic model.

7. Method according to Claim 6, wherein the state variable filter (142) is restricted depending on a prioritizing sequence, based on a restriction of a manipulated variable (120, 144b, 144d) of the dynamic model, and/or based on a restriction of a state variable (120, 144b, 144d) of the dynamic model.

8. Method according to Claim 6 or 7, wherein the at least one restricted manipulated variable (120, 144b, 144d) of the dynamic model is a manipulated variable and/or a gradient of the manipulated variable and/or an acceleration of the manipulated variable of at least one actuator which influences lateral dynamics of the mobile platform.

9. Method according to Claim 8, wherein the at least one actuator controls a steering angle and/or at least one brake pressure and/or at least one wheel damper.

10. Method according to Claims 6 to 9, wherein the at least one restriction of the state variable (120, 144b, 144d) of the dynamic model is a sideslip angle and/or a yaw angle and/or a yaw rate and/or a lateral acceleration and/or a steering angle and/or a lateral offset of the mobile platform.

11. Method in which, based on a time sequence of values of at least one manipulated variable (160), according to Claims 1 to 10, a control signal for controlling an at least partly automated vehicle is provided; and/or, based on the time sequence of values of at least one manipulated variable (160), a warning signal for warning a vehicle occupant is provided.

12. Use of the method according to Claims 1 to 10 for avoiding accidents in road traffic.

13. Control device designed to carry out a method according to one of Claims 1 to 11.

14. Computer program, comprising commands which, when the computer program is executed by a computer, cause it to carry out the method according to one of Claims 1 to 11.

15. Machine-readable storage medium on which the computer program according to Claim 14 is stored.


**Revendications**

1. Procédé de génération d'une trajectoire de déplacement latéral pour une plate-forme mobile au moins partiellement automatisée, comprenant les étapes suivantes :

   prévoir un déplacement latéral cible (110) (S1) ;
   inverser un modèle dynamique fourni de la plate-forme mobile ;
   fournir au moins une restriction d'une variable système (120) (S4) du modèle dynamique pour la détermination de la trajectoire de déplacement latéral, le modèle dynamique dépendant des variables d'état (120, 144b, 144d) suivantes : angle de giration et angle de lacet et taux de lacet et angle de braquage et déplacement latéral de la plate-forme mobile ;
   déterminer une séquence temporelle de points de trajectoire de déplacement latéral pour le modèle dynamique inversé (150) au moyen d'un filtre (140, 142) à variables d'état, sur la base de ladite au moins une restriction de la variable système (120) et du déplacement latéral cible (110, 130) en tant que signal d'entrée ;
   chaque point de la séquence temporelle de la trajectoire de déplacement latéral étant déterminé de manière analytique ; et
   la détermination d'une séquence temporelle de valeurs d'au moins une variable de commande (160) (S6) pour la plate-forme mobile, au moyen du modèle dynamique inversé (150) et de la séquence temporelle des points de la trajectoire de décalage latéral en tant que signal d'entrée pour le modèle dynamique inversé (150) (S5), afin de générer la trajectoire de décalage latéral.

2. Procédé selon la revendication 1, dans lequel le filtre (140, 142) à variables d'état présente une dynamique cible prédéfinie et, en particulier, la dynamique cible prédéfinie est **caractérisée par** un modèle à voie unique étendu de la plate-forme mobile.

3. Procédé selon l'une des revendications précédentes, dans lequel le modèle dynamique de la plate-forme mobile est transformé en coordonnées planes ; et en particulier, le système du filtre à variables d'état et le système du modèle dynamique présentent un ordre de système identique.

4. Procédé selon l'une des revendications précédentes, dans lequel les points respectifs de la séquence temporelle des trajectoires de décalage latéral sont déterminés analytiquement au moyen d'une solution numérique d'une équation différentielle.

5. Procédé selon l'une des revendications précédentes, dans lequel ladite au moins une variable système du modèle dynamique basé sur la planéité (150) est limitée au moyen d'une restriction d'état polytopique de ladite au moins une variable système du filtre (142) à variables d'état.

6. Procédé selon l'une des revendications précédentes, dans lequel ladite au moins une restriction d'une variable système du modèle dynamique concerne au moins une restriction d'une variable de commande (120, 144b, 144d) et/ou au moins une restriction d'une variable d'état (120, 144b, 144d) du modèle dynamique.

7. Procédé selon la revendication 6, dans lequel le filtre (142) à variables d'état est limité en fonction d'un ordre de priorité basé sur une restriction d'une variable de commande (120, 144b, 144d) du modèle dynamique et/ou en fonction d'une restriction d'une variable d'état (120, 144b, 144d) du modèle dynamique.

8. Procédé selon la revendication 6 ou la revendication 7, dans lequel ladite au moins une variable de commande restreinte (120, 144b, 144d) du modèle dynamique est une variable de commande et/ou un gradient de la variable de commande et/ou une accélération de la variable de commande d'au moins un actionneur qui influence la dynamique latérale de la plate-forme mobile.

9. Procédé selon la revendication 8, dans lequel ledit au moins un actionneur commande un angle de braquage et/ou au moins une pression de freinage et/ou au moins un amortisseur de roue.

10. Procédé selon les revendications 6 à 9, dans lequel ladite au moins une restriction de la variable d'état (120, 144b, 144d) du modèle dynamique est un angle de giration et/ou un angle de lacet et/ou un taux de lacet et/ou une accélération transversale et/ou un angle de braquage et/ou un décalage latéral de la plate-forme mobile.

11. Procédé dans lequel, sur la base d'une séquence temporelle de valeurs d'au moins une variable de commande (160), conformément aux revendications 1 à 10, un signal de commande est fourni pour commander un véhicule au moins partiellement automatisé ; et/ou, sur la base de la séquence temporelle de valeurs d'au moins une variable de commande (160), un signal d'avertissement est fourni pour avertir un occupant du véhicule.

12. Utilisation du procédé selon les revendications 1 à 10 pour éviter des accidents de la circulation routière.

13. Dispositif de commande qui est conçu pour mettre en œuvre un procédé selon l'une des revendications 1 à 11.

14. Programme informatique comprenant des instructions qui, lors de l'exécution du programme informatique par un ordinateur, amènent celui-ci à mettre en œuvre le procédé selon l'une des revendications 1 à 11.

15. Support de stockage lisible par machine sur lequel est enregistré le programme informatique selon la revendication 14.

**Fig. 1**

**Fig. 2**

**Fig. 3**

**Fig. 4**

Fig. 5a

Fig. 5b

Fig. 6a

Fig. 6b

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **JOOS STEFFEN et al.** Online-trajectory planning for state- and input-constrained linear SISO systems using a switched state variable filter. *IFAC-PAPER-SONLINE*, 01 July 2017, vol. 50 (1)